# DEMANDE DE BREVET EUROPEEN

(11) **EP 2 221 762 A1**
(43) Date de publication de la demande: **25.08.2010**
(21) Numéro de dépôt: 10153610.0
(22) Date de dépôt: 15.02.2010
(51) Int. Cl.: G06Q 30/00

(54) **Procédé et système de supervision de l'activité d'un utilisateur dans un monde virtuel**

(30) Priorité: 20.02.2009 FR 0951120
(71) Demandeur: FRANCE TELECOM, 75015 Paris (FR)
(72) Inventeur: Bouget, Loïc, 35000, Rennes (FR); Floutier, Christophe, 35700, Rennes (FR); Bataille, Guillaume, 35530, Noyal sur Vilaine (FR)

(57) **Abrégé**

L'invention concerne un procédé de supervision d'une activité d'un utilisateur dans un monde virtuel (106).

Selon l'invention, un tel procédé comprend les étapes suivantes :
- détection (200) d'au moins une information de collision entre une ligne (112) d'observation associée audit utilisateur et au moins un premier objet (P2) virtuel, à l'intérieur dudit monde virtuel (106) ;
- détermination (201) d'au moins une information d'interaction entre l'utilisateur et ledit premier objet (P2), à partir de ladite information de collision.

## Description

La présente invention concerne une technique de suivi et d'analyse de comportements et d'activités d'un utilisateur évoluant à l'intérieur d'un environnement de réalité virtuelle, encore appelé de façon courante monde virtuel.

L'invention vise en effet une gestion efficace du suivi du parcours utilisateur dans le monde virtuel, ainsi que la remontée d'informations de visibilité concernant des objets virtuels, par exemple et de façon non limitative de type supports publicitaires, intégrés dans un monde virtuel. Elle vise encore le traitement d'informations d'interaction entre un utilisateur et de tels objets virtuels.

Il existe de nombreux travaux dans le domaine de la réalité virtuelle pour améliorer la qualité des mondes virtuels, ainsi que celle des interactions d'un utilisateur avec un ou plusieurs avatars le représentant à l'intérieur de tels mondes virtuels, ou bien encore pour favoriser des interactions naturelles et intuitives entre avatars. Cependant, les inventeurs ont constaté l'absence de solution technique susceptible de permettre une gestion statistique des interactions avec les objets virtuels présents dans les mondes virtuels, en fonction du comportement d'un utilisateur, ou bien en fonction du comportement d'une pluralité d'utilisateurs évoluant à l'intérieur d'un même monde virtuel. De telles statistiques présentent pourtant un intérêt considérable dans le cadre d'applications publicitaires.

Dans ce contexte, l'invention consiste à apporter une solution efficace au problème de la supervision du comportement d'un utilisateur dans un monde virtuel 3D (trois dimensions), notamment et non exclusivement, son parcours à l'intérieur du monde virtuel, ses interactions avec différents objets inclus dans le monde virtuel, notamment des panneaux publicitaires ou des vitrines de magasins présents à l'intérieur du monde virtuel, la visibilité des objets publicitaires par l'utilisateur lors de son déplacement à l'intérieur du monde 3D.

Il s'agit également au moyen de l'invention de fournir une technique simple et efficace permettant, d'adapter ou de personnaliser un monde virtuel 3D en différé, ou bien en temps réel, en tenant compte d'un résultat de supervision du comportement d'un ou de plusieurs utilisateurs évoluant à l'intérieur d'un monde virtuel 3D.

A ce titre, l'invention propose un procédé de supervision du comportement d'un utilisateur dans un monde virtuel.

Selon l'invention, un tel procédé comprend avantageusement les étapes suivantes :
- détection d'au moins une information de collision entre une ligne d'observation associée audit utilisateur et au moins un premier objet virtuel, à l'intérieur dudit monde virtuel ;
- détermination d'au moins une information d'interaction entre l'utilisateur et ledit premier objet, à partir de ladite information de collision.

L'information de collision détectée permet de signaler qu'une ligne imaginaire représentative du regard d'un utilisateur, dite ligne d'observation, lors de son parcours à l'intérieur d'un monde virtuel, a croisé au moins une partie d'un objet virtuel prédéterminé, tel que, par exemple et de façon non limitative, un panneau publicitaire.

Une fois détectée ladite information de collision entre la ligne du regard de l'utilisateur porté par celui-ci à l'intérieur dudit monde virtuel et un objet inclus dans ce dernier, l'étape de détermination d'une information d'interaction permet d'anticiper quelle est la typologie d'interaction produite entre l'utilisateur et cet objet.

En effet, on pourra ainsi distinguer entre un simple passage sans arrêt de la ligne du regard de l'utilisateur sur la surface d'un objet inclus à l'intérieur du monde virtuel et un arrêt prolongé de la ligne de regard de l'utilisateur sur ledit objet, un tel arrêt pouvant être interprété comme synonyme d'une marque d'intérêt de l'utilisateur envers ledit objet.

De même, il sera possible de distinguer entre un rapprochement du point d'observation par rapport audit objet, pouvant être interprété comme une marque d'intérêt. Au contraire, un éloignement du point d'observation par rapport audit objet pourra être interprété comme une marque de désintérêt d'un utilisateur envers ledit objet.

Dans un mode de réalisation préférée de l'invention, le procédé selon l'invention comprend une étape supplémentaire de transmission de ladite information d'interaction vers une entité de contrôle d'interactions, de façon à calculer au moins une mesure d'interaction propre audit premier objet virtuel.

Une fois déterminée l'information d'interaction entre l'utilisateur et un objet donné contenu à l'intérieur du monde virtuel parcouru par l'utilisateur, à ladite étape de détermination d'au moins une information d'interaction, celle-ci est transmise à une entité de contrôle d'interactions, de façon à calculer au moins une mesure d'interaction propre audit objet virtuel.

On comprendra donc aisément l'intérêt de l'invention dans un contexte d'évaluation de la visibilité d'un objet virtuel donné à l'intérieur d'un monde ou monde virtuel 3D et d'évaluation d'un niveau d'interaction mesuré entre l'utilisateur et ledit objet, d'autant plus lorsque l'objet sera du type panneau virtuel publicitaire virtuel délivrant des informations publicitaires propre au monde réel, ou bien vitrine virtuelle reproduisant une vitrine de boutique connue dans le monde réel.

Le procédé selon l'invention permet ainsi et de façon avantageuse une supervision dynamique et efficace d'u comportement d'un utilisateur évoluant à l'intérieur d'un monde ou monde virtuel 3D, de façon à pouvoir en déduire des améliorations dudit monde, en termes de disposition de ses divers composants virtuels constitutifs, de personnalisation de celui-ci à des types d'utilisateurs d'intérêt identifié, etc., ou simplement de mesure d'audience relative à des publicités ou plus généralement à des informations qui seraient diffusées par voie d'affichage ou par toute autre voie à l'intérieur de tout ou partie dudit monde virtuel.

Un tel procédé permet en outre de remonter vers une entité de contrôle toutes informations d'interaction du type:
- parcours d'un utilisateur à l'intérieur dudit monde virtuel 3D ;
- interaction de l'utilisateur avec tout type de supports publicitaires présents dans le monde 3D (panneaux publicitaires, vitrines pro, etc.) ;
- niveau de visibilité des objets formant supports publicitaire/, d'information au fur et à mesure du parcours de l'utilisateur à l'intérieur dudit monde virtuel - l'utilisateur a-t-il vu les supports publicitaires, à quelle distance était-il du support lorsqu'il l'a visualisé, etc. ?

Ces différentes informations d'interaction pourront être ensuite interprétées au moyen de méthodes d'interprétation statistiques, de mesures d'audience, ou bien encore, de toutes autres méthodes d'interprétation.

Dans un mode de réalisation préféré de l'invention, le procédé selon l'invention comprend une étape d'adaptation dudit premier objet virtuel en fonction d'au moins une mesure d'interaction calculée pour ledit premier objet virtuel.

Une telle approche s'avère particulièrement avantageuse en ce qu'elle permet une adaptation, voir une personnalisation du premier objet virtuel en fonction du niveau de mesure d'interaction déterminé relativement à un utilisateur et audit premier objet. A titre d'exemple illustratif et non limitatif de l'invention, une telle adaptation pourra consister en la proposition d'une deuxième offre publicitaire personnalisée sur un objet virtuel de type panneau publicitaire, dès lors que l'utilisateur aura porté un regard prolongé sur une première offre publicitaire initialement accessible sur ce panneau publicitaire, ou bien encore en la proposition d'un complément d'information délivré audit utilisateur.

Dans une variante de mise en oeuvre du procédé selon l'invention, ce dernier comprend une étape d'adaptation d'au moins un deuxième objet virtuel, ladite étape tenant compte d'au moins une mesure d'interaction calculée pour ledit premier objet virtuel et d'au moins une information prévisionnelle de déplacement dudit utilisateur à l'intérieur d'un voisinage dudit deuxième objet.

Une telle variante de mise en oeuvre de ce procédé selon l'invention permet avantageusement une adaptation personnalisée étendue de toute ou partie des objets contenus à l'intérieur dudit monde virtuel, au fur et à mesure du déplacement ou du parcours d'un utilisateur à l'intérieur du monde virtuel et en tenant compte d'une mesure d'interaction calculée pour ledit utilisateur et en relation avec le ledit premier objet.

Il est bien entendu possible d'étendre cette variante de mise en oeuvre du procédé selon l'invention à une adaptation du monde virtuel, ou tout le moins de certaines scènes constitutives de ce dernier uniquement. De telles scènes pourront être définies comme des zones dudit monde virtuel formant voisinage d'une localisation autour dudit utilisateur. Leurs adaptations conjointes ou respectives pourront en outre avantageusement tenir compte d'une pluralité de mesures d'interaction calculées par ladite entité de mesure de niveaux d'interaction relativement à une pluralité d'utilisateurs.

Une telle approche revient à permettre une adaptation dynamique de tout ou partie d'un monde virtuel en fonction d'une mesure d'audience ou d'intérêts propres des utilisateurs de ce monde virtuel. Ceci s'avère particulièrement avantageux lorsqu'il s'agit de mettre à jour et/ou d'adapter, en fonction de critères d'intérêt mesurés ou détectés relativement aux utilisateurs dudit monde virtuel, des supports publicitaires ou d'informations qui seraient volontairement disposés à l'intérieur du monde virtuel.

Afin de ne pas consommer inutilement des ressources matérielles et/ou logicielles, l'adaptation, éventuellement dynamique, des scènes ou des objets constitutifs du monde virtuel se fera en fonction d'une information prévisionnelle de déplacement dudit utilisateur dans un voisinage dudit deuxième objet ou de la scène devant être dynamiquement adapté(e). Une telle approche technique s'avère particulièrement pertinente et efficace puisque d'une part elle permet d'économiser les ressources matérielles et logicielles, l'adaptation du monde virtuel n'étant réalisée à un instant donné que pour une partie dudit environnement correspondant à une zone d'évolution instantanée de l'utilisateur et, d'autre part, parce qu'elle permet de limiter l'adaptation dudit environnement virtuel à des parties dudit environnement qui seront effectivement vues par l'utilisateur au fur et à mesure de son cheminement dans ce dernier.

La technique du lancer de rayon (encore connu sous la terminologie "ray tracing" en anglais) est une technique de rendu appliqué à la synthèse d'image, laquelle consiste habituellement à simuler le parcours inverse de la lumière depuis un point d'une scène incluse à l'intérieur d'un environnement virtuel et jusqu'à un point représentatif d'un oeil d'un utilisateur.

Ainsi, préférentiellement, ladite étape de détection comprend une étape de lancer de rayon entre un point d'observation représentatif d'une position du regard propre dudit utilisateur et au moins un objet situé dans un angle de vision défini à partir dudit point d'observation, de façon à obtenir au moins une information représentative d'un degré de visibilité dudit au moins un objet par ledit utilisateur.

Dans le contexte de l'invention, cette technique du lancer de rayon est avantageusement mise en oeuvre à l'inverse de son usage habituel et connu de l'homme du métier, pour obtenir une information de visibilité représentative d'une vue partielle, totale, de dos etc. d'un objet contenu dans une scène d'un environnement virtuel, le lancer de rayon étant alors pratiqué depuis un point d'observation représentatif d'une position du regard d'un utilisateur et vers un objet contenu dans ladite scène et situé dans un angle à partir de ce point d'observation définissant le champ de vision de l'utilisateur. Une telle approche permet de façon avantageuse de déterminer facilement si un objet du type panneau publicitaire est bien visible, dans sa totalité ou de façon partielle, par l'utilisateur dans le champ de vision duquel il se situe. En fonction de cette information de visibilité d'un objet contenu à l'intérieur d'un environnement virtuel considéré et déterminé par cette application particulière de la technique de lancer de rayon, il est ensuite possible, d'une façon optimale, de repositionner ce panneau ou cette objet à l'intérieur dudit environnement virtuel, de façon à lui conférer une plus grande et/ou meilleure visibilité auprès des utilisateurs, lorsque cela s'avère nécessaire.

Avantageusement, le procédé de supervision selon l'invention comprend une étape de détermination d'un niveau de visibilité obtenu par comparaison de ladite information représentative d'un degré de visibilité avec au moins un critère prédéterminé de visibilité appartenant au groupe comprenant:
- un seuil de surface apparente dudit objet;
- un seuil de distance dudit objet audit point d'observation;
- une localisation du centre dudit objet à l'intérieur dudit angle de vision.

Dans un mode de réalisation avantageux de l'invention, ledit objet étant du type panneau virtuel destiné à recevoir au moins une information publicitaire, ledit niveau de visibilité est transmis à ladite entité de mesure d'informations d'interaction à l'occasion de ladite étape de transmission, de façon à calculer au moins une valeur de mesure d'audience de ladite information publicitaire à l'intérieur dudit environnement virtuel.

De façon avantageuse, ladite information d'interaction est du type appartenant au groupe comprenant :
- une durée d'observation dudit premier objet ;
- un rapprochement entre ledit point d'observation représentatif et ledit premier objet;
- éloignement entre ledit point d'observation représentatif et ledit premier objet;
- détournement dudit point d'observation par rapport audit premier objet.

Dans un mode de réalisation préféré de l'invention, ladite étape de détection est réalisée d'une façon dynamique et à intervalles de temps réguliers, en cours de déplacement dudit utilisateur à l'intérieur dudit environnement virtuel.

Une telle approche permet d'une part d'évaluer différentes informations d'interaction sur une courte période de temps, de façon à proposer ou à anticiper une mise à jour de tout ou partie de l'environnement virtuel quasiment en temps réel, ce qui augmente le niveau d'attractivité pour l'utilisateur. D'autres part, puisque les mises à jour dudit environnement virtuel ne seront pas nécessairement identiques pour tous les utilisateurs, les intervalles de temps définis dans le cadre de la gestion des mises à jour propres à chaque utilisateur pourront être définis selon une chronologie permettant d'éviter des mises à jour simultanées, de façon à économiser les ressources matérielles et logicielles servant de support au monde virtuel, mais également, d'adapter le choix d'un contenu publicitaire à utiliser en fonction du comportement d'un utilisateur.

Préférentiellement, ladite étape de détection dynamique de collision tient compte d'un voisinage dudit utilisateur, ledit voisinage étant formé par une zone prédéterminée définie autour dudit point d'observation, zone dont au moins un point appartenant à son contour est situé à une distance prédéterminé dudit point d'observation.

Un tel voisinage peut par exemple prendre la forme d'un disque dont la longueur du rayon sera préalablement paramétrée à partir dudit point d'observation.

L'invention concerne également un système de contrôle/supervision d'une activité d'un utilisateur dans un environnement virtuel.

Préférentiellement, un tel système comprend :
- des moyens de détection dynamique d'au moins une information de collision entre un point d'observation de l'utilisateur, d'une scène appartenant audit environnement virtuel et au moins un objet constitutif de ladite scène ;
- des moyens de détermination d'au moins une information d'interaction entre l'utilisateur et ledit objet, à partir de ladite information de collision;
- des moyens de transmission de ladite information d'interaction à destination d'une entité de mesure d'informations d'interaction, de façon à calculer au moins une mesure d'interaction avec ledit objet qui soit propre dudit utilisateur.

L'invention concerne aussi et de façon avantageuse, un produit programme d'ordinateur téléchargeable depuis un réseau de communication et/ou stocké sur un support lisible par ordinateur et/ou exécutable par un microprocesseur, un tel programme comprenant des instructions de code de programme pour l'exécution d'un procédé de supervision tel que précité, lorsqu'il est exécuté sur un ordinateur.

Il est bien entendu possible d'envisager sans limitation aucune, toutes autres combinaisons des caractéristiques précitées propres du procédé de supervision du comportement d'un utilisateur dans un environnement virtuel, décrit ci-dessus.

Les caractéristiques et avantages techniques de la présente invention ressortiront mieux de la description suivante, faite à titre indicatif et non limitatif, au regard des dessins annexés sur lesquels :
- la figure 1 décrit le principe générale de détermination d'une information de collision avec un ensemble de panneaux publicitaires présents à l'intérieur d'une scène d'un environnement virtuel;
- la figure 2 résume les grandes étapes d'un procédé de supervision d'une activité d'un utilisateur dans un environnement virtuel selon l'invention.

Le principe de la supervision d'une activité d'un utilisateur à l'intérieur d'un environnement ou monde virtuel s'appuie sur la détermination d'informations de visibilité, par exécution de routines de détection collision entre un point d'observation représentatif d'une position du regard d'un utilisateur dans le monde virtuel et des objets 3D constitutifs et/ou présents dans ce dernier.

Ces routines permettent de définir la notion de scènes locales 3D autour d'un observateur. Elles mettent également en oeuvre des fonctionnalités de lancer de rayon, selon un mode d'application inverse de celui habituellement considéré dans le domaine de la synthèse d'image, de façon à détecter si un objet contenu dans une scène est visible ou non depuis un point d'observation donné.

Les algorithmes normalisés AFX, tels que PB-Tree et ondelettes, permettent de garantir qu'à un instant donné les scènes locales nécessaires au rendu 3D seront minimales en termes de complexité et de primitives graphiques.

Comme il est dit précédemment, le système de collision maintient une scène locale autour de l'observateur. Cette mini-scène contient une description géométrique de tous les objets proches de l'observateur (nous appellerons ces objets « primitives géométriques »). A l'heure actuelle, les seules primitives géométriques gérées par le moteur de rendu de l'environnement virtuel (encore appelé "player" selon une terminologie anglophone) sont les bâtiments 2.5D, ainsi que les primitives géométriques du terrain ou bien encore, que des objets ponctuels représentatifs de mobiliers urbains, panneaux publicitaires, etc.

Un lancer de rayon ayant pour origine la position de l'oeit de l'observateur et pour destination un point 3D *P* arbitraire permet de déterminer si ce point est caché par une primitive géométrique. C'est ce système qui est utilisé pour détecter la visibilité des supports publicitaires.

Pour des raisons de performance, un seul lancer de rayon sera utilisé pour chaque panneau, le point destination choisi étant le centre d'un objet virtuel, par exemple et de façon non limitative, le centre d'un panneau publicitaire contenu dans une scène définie au voisinage du point d'observation de l'utilisateur.

Au même titre qu'un gestionnaire de ville met à jour des primitives géométriques correspondant à des bâtiments dans la scène locale, un gestionnaire de publicités pourra jouer assurer une fonction de mise à jour et/ou d'adaptation d'un ou plusieurs panneaux présents dans une scène locale, c'est-à-dire dans une scène directement située dans le voisinage du point d'observation propre d'un utilisateur.

Ces informations de collision ainsi détectées sont nécessaires car des supports publicitaires peuvent cacher d'autres supports publicitaires.

Notons que la fréquence de cette mise à jour n'a pas besoin d'être aussi haute que la fréquence du rendu (cinq mises à jour par seconde est suffisant).

L'autre rôle du gestionnaire de publicités est de collecter les informations de visibilité de chaque panneau afin de les fournir à un tiers de comptage.

Le test de visibilité d'un support publicitaire se fait par une liste de traitements de plus en plus coûteux, dans le but d'éliminer au plus tôt les panneaux qui ne sont pas visibles.

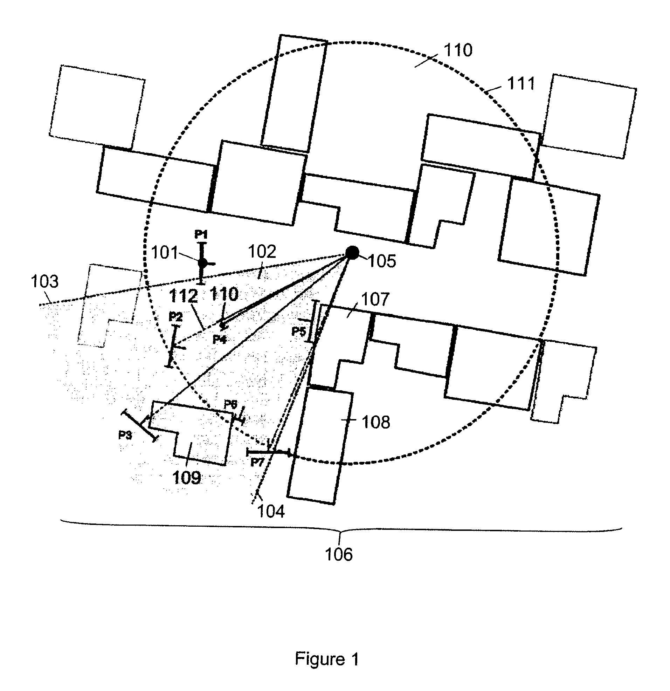

La figure 1 illustre les différents cas qui peuvent se présenter. Parmi les sept supports *P1* à *P7* publicitaires contenus dans la scène locale, seul le panneau *P4* est considéré comme visible selon les critères de visibilité retenus.

La liste illustrative et non limitative des traitements appliqués est la suivante, par ordre croissant de charge CPU :
- si la face du panneau exposée à l'observateur est l'arrière, le support ne peut pas être visible. C'est le cas du panneau *P5* sur la figure 1.
- si la surface apparente maximale du support est inférieure à un seuil donné, le support est considéré comme non visible. Ce critère traduit le fait que le support est soit trop éloigné, soit l'angle de vision est trop rasant. C'est ce filtrage qui permet d'éliminer le panneau *P6* dans la figure 1.
- si le centre 101 du support *P1* ne se trouve pas dans le champ 102 de visibilité de l'utilisateur défini par l'angle formé entre les droites 103 et 104 à partir du point 105 d'observation caractéristique d'une localisation du regard de l'utilisateur dans l'environnement 106 virtuel, le support *P1* est alors considéré comme non visible (approximation acceptable).
- enfin, si tous les tests précédant n'ont pas pu établir que le support est non visible, on procède au test fin, à savoir le lancer de rayon, qui permettra de déterminer si le support est caché par une autre géométrie (107, 108, 109) - bâtiments, terrains, autres panneaux, etc. Dans la figure 1, les supports *P2, P3* et *P7* sont considérés comme non visibles selon ce critère. *P2* est en effet au moins partiellement masqué par le panneau *P4*.

L'ensemble de ces critères permet d'établir une visibilité binaire pour chaque support, caractéristique d'une information d'interaction.

Il est possible de fournir une meilleure approximation en calculant la visibilité sous forme de pourcentage. Dans ce cas, on utilisera plusieurs points de référence pour chaque support au lieu d'un seul.

Une fois détectée ladite information de collision entre la ligne du regard de l'utilisateur porté par celui-ci à l'intérieur dudit environnement virtuel et un objet constitutif de ce dernier, l'étape de détermination d'une information d'interaction permet d'anticiper quelle est la typologie d'interaction détectée entre l'utilisateur et cet objet. En effet, on pourra ainsi distinguer entre un simple passage sans arrêt de la ligne du regard de l'utilisateur sur la surface d'un objet présent à l'intérieur de l'environnement virtuel et un arrêt prolongé de la ligne de regard de l'utilisateur sur ledit objet, un tel arrêt pouvant être interprété comme synonyme d'une marque d'intérêt de l'utilisateur envers ledit objet. De même, il sera possible de distinguer entre un rapprochement du point d'observation par rapport audit objet, pouvant être interprété comme une marque d'intérêt. Au contraire, un éloignement du point d'observation par rapport audit objet pourra être interprété comme une marque de désintérêt d'un utilisateur envers ledit objet.

Une fois déterminée l'information d'interaction entre l'utilisateur et un objet donné contenu à l'intérieur de l'environnement virtuel parcouru par l'utilisateur, celle-ci est transmise à une entité de contrôle d'interactions, de façon à calculer au moins une mesure d'interaction propre audit objet virtuel.

On comprendra donc aisément l'intérêt de l'invention dans un contexte d'évaluation de la visibilité d'un objet virtuel donné à l'intérieur d'un environnement ou monde virtuel 3D et d'évaluation d'un niveau d'interaction mesuré entre l'utilisateur et ledit objet, d'autant plus lorsque l'objet sera du type panneau virtuel publicitaire virtuel délivrant des informations publicitaires propre au monde réel, ou bien vitrine virtuelle reproduisant une vitrine de boutique connue dans le monde réel.

Le procédé selon l'invention permet ainsi et de façon avantageuse une supervision dynamique et efficace du comportement d'un utilisateur évoluant à l'intérieur d'un environnement ou monde virtuel 3D, de façon à pouvoir en déduire des améliorations dudit monde, en termes de disposition de ses divers composants virtuels constitutifs, de personnalisation de celui-ci à des types d'utilisateurs d'intérêt identifié, etc., ou simplement de mesure d'audience relative à des publicités ou plus généralement à des informations qui seraient diffusées par voie d'affichage ou par toute autre voie à l'intérieur de tout ou partie dudit monde virtuel.

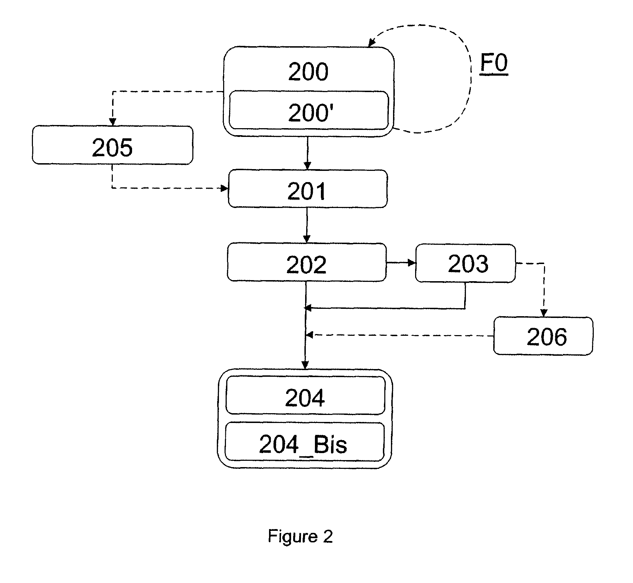

On résume au regard de la figure 2 et en relation avec la figure 1, les grandes étapes du procédé de supervision d'une activité d'un utilisateur à l'intérieur d'un environnement virtuel :
- détection 200 d'au moins une information de collision entre une ligne 112 d'observation associée audit utilisateur et au moins un premier objet (P2) virtuel, à l'intérieur dudit monde virtuel 106. Une telle étape 200 de détection met en oeuvre une étape 200' de lancer de rayon entre un point 105 d'observation représentatif d'une position du regard propre dudit utilisateur et au moins un objet P4 situé dans un angle 102 de vision défini à partir dudit point 105 d'observation et, entre les droites 103 et 104, de façon à obtenir au moins une information de visibilité dudit au moins un objet P2 par ledit utilisateur. ;
- détermination 201 d'au moins une information d'interaction entre l'utilisateur et ledit premier objet P2, à partir de ladite information de collision;
- transmission 202 de ladite information d'interaction vers une entité de contrôle d'interactions, de façon à calculer 203 au moins une mesure d'interaction propre audit objet premier P4 virtuel.

Selon deux variantes possibles de mise en oeuvre de l'invention, le procédé selon comprend une étape 204 d'adaptation dudit premier objet P2 virtuel en fonction de ladite mesure d'interaction calculée, ou une étape 204_Bis d'adaptation d'au moins un deuxième objet P4 virtuel, ladite étape 204_Bis tenant alors compte d'au moins une mesure d'interaction calculée pour ledit premier objet P2 et d'au moins une information prévisionnelle de déplacement dudit utilisateur à l'intérieur d'un voisinage dudit deuxième objet P4.

Le procédé selon l'invention comprend en outre une étape 205 de détermination d'un niveau de visibilité obtenu par comparaison de ladite information représentative d'un degré de visibilité avec au moins un critère prédéterminé de visibilité appartenant au groupe comprenant:
- un seuil de surface apparente dudit objet;
- un seuil de distance dudit objet audit point d'observation;
- une localisation du centre 110 dudit objet P2 à l'intérieur dudit angle 102 de vision.

Selon l'invention, ledit objet P2 étant du type panneau virtuel destiné à recevoir au moins une information publicitaire, ledit niveau de visibilité est transmis à ladite entité de mesure d'informations d'interaction à l'occasion de ladite étape 202 de transmission, de façon à calculer 206 au moins une valeur de mesure d'audience de ladite information publicitaire à l'intérieur dudit environnement 106 virtuel.

Dans un mode de réalisation possible de l'invention ladite information d'interaction est du type appartenant au groupe comprenant :
- une durée d'observation dudit premier obj et ;
- un rapprochement entre un point d'observation représentatif du regard de l'utilisateur et ledit premier objet;
- éloignement entre ledit point d'observation représentatif et ledit premier objet;
- détournement dudit point d'observation par rapport audit premier objet.

Ladite étape 200 de détection, laquelle peut être dynamique, est réalisée (flèche F0, figure 2) à intervalles de temps réguliers, en cours de déplacement dudit utilisateur à l'intérieur dudit environnement virtuel, au moyen d'une étape de lancer 200' de rayon entre ledit point d'observation et ledit au moins un premier objet P4 virtuel.

Elle tient compte également d'un voisinage 100 dudit utilisateur, ledit voisinage 100 étant formé par une zone définie autour dudit point 105 d'observation et dont au moins un point appartenant au contour de ladite zone 100 est situé à une distance prédéterminé dudit point 105 d'observation.

La solution technique proposée autorise ainsi une supervision efficace du suivi du parcours utilisateur dans un environnement 3D et plus généralement de ses activités dans ce dernier. Elle permet également une remontée d'informations de visibilité des supports publicitaires intégrés dans la 3D et la remontée des interactions de l'utilisateur avec ces supports publicitaires.

## Revendications

1. Procédé de supervision d'une activité d'un utilisateur dans un monde virtuel (106), **caractérisé en ce qu'**il comprend les étapes suivantes :
- détection (200) d'au moins une information de collision entre une ligne (112) d'observation associée audit utilisateur et au moins un premier objet (P2) virtuel, à l'intérieur dudit monde virtuel (106) ;
- détermination (201) d'au moins une information d'interaction entre l'utilisateur et ledit premier objet (P2), à partir de ladite information de collision.

2. Procédé selon la revendication 1, **caractérisé en ce qu'**il comprend une étape de transmission (202) de ladite information d'interaction vers une entité de contrôle d'interactions, de façon à calculer (203) au moins une mesure d'interaction propre audit premier objet (P2) virtuel.

3. Procédé selon la revendication 1, **caractérisé en ce qu'**il comprend une étape (204) d'adaptation dudit premier objet (P2) virtuel en fonction d'au moins une mesure d'interaction calculée pour ledit premier objet virtuel (P2).

4. Procédé selon la revendication 1, **caractérisé en ce qu'**il comprend une étape (204_Bis) d'adaptation d'au moins un deuxième objet (P4) virtuel, ladite étape (204_Bis) tenant compte d'au moins une mesure d'interaction calculée pour ledit premier objet (P2) virtuel et d'au moins une information prévisionnelle de déplacement dudit utilisateur à l'intérieur d'un voisinage dudit deuxième objet (P4).

5. Procédé selon la revendication 1, **caractérisé en ce que** ladite étape (200) de détection comprend une étape (200') de lancer de rayon entre un point (105) d'observation représentatif d'une position du regard propre dudit utilisateur et au moins un objet situé dans un angle (102) de vision défini à partir dudit point (105) d'observation, de façon à obtenir au moins une information représentative d'un degré de visibilité dudit au moins un objet par ledit utilisateur.

6. Procédé selon la revendication 5, **caractérisé en ce qu'**il comprend une étape (205) de détermination d'un niveau de visibilité obtenu par comparaison (206) de ladite information représentative d'un degré de visibilité avec au moins un critère prédéterminé de visibilité appartenant au groupe comprenant:
- un seuil de surface apparente dudit objet;
- un seuil de distance dudit objet audit point d'observation;
- une localisation du centre dudit objet à l'intérieur dudit angle de vision.

7. Procédé selon la revendication 6, **caractérisé en ce que** ledit objet étant du type panneau virtuel destiné à recevoir au moins une information publicitaire, ledit niveau de visibilité est transmis à ladite entité de mesure d'informations d'interaction à l'occasion de ladite étape de transmission, de façon à calculer au moins une valeur de mesure d'audience de ladite information publicitaire à l'intérieur dudit monde virtuel.

8. Procédé selon la revendication 5, **caractérisé en ce que** ladite information d'interaction est du type appartenant au groupe comprenant :
- une durée d'observation dudit premier objet ;
- un rapprochement entre ledit point d'observation représentatif et ledit premier objet;
- éloignement entre ledit point d'observation représentatif et ledit premier objet;
- détournement dudit point d'observation par rapport audit premier objet.

9. Procédé selon la revendication 1, **caractérisé en ce que** ladite étape (200) de détection est réalisée (F0) de façon dynamique, à intervalles de temps réguliers, en cours de déplacement dudit utilisateur à l'intérieur dudit monde (106) virtuel.

10. Procédé selon la revendication 5, **caractérisé en ce que** ladite étape (200) de détection de collision tient compte d'un voisinage dudit utilisateur, ledit voisinage étant formé par une zone (110) définie autour dudit point (105) d'observation et dont au moins un point appartenant au contour (111) de ladite zone (110) est situé à une distance prédéterminé dudit point (105) d'observation.

11. Système de supervision d'une activité d'un utilisateur dans un monde virtuel (106), **caractérisé en ce qu'**il comprend :
- des moyens de détection d'au moins une information de collision entre une ligne d'observation associée audit utilisateur et au moins un premier objet (P2) virtuel, à l'intérieur dudit monde virtuel (106);
- des moyens de détermination d'au moins une information d'interaction entre l'utilisateur et ledit premier objet (P2), à partir de ladite information de collision.

12. Système selon la revendication 11, **caractérisé en ce que** qu'il comprend des moyens de transmission de ladite information d'interaction vers une entité de contrôle d'interactions, de façon à calculer au moins une mesure d'interaction propre audit premier objet (P2) virtuel.

13. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de supervision d'une activité d'un utilisateur dans un monde virtuel (106), selon l'une au moins des revendications 1 à 10, lorsqu'il est exécuté sur un ordinateur.
